# EUROPÄISCHE PATENTSCHRIFT

(11) **EP 1 844 955 B1**
(45) Veröffentlichungstag und Bekanntmachung des Hinweises auf die Patenterteilung: **10.06.2009**
(21) Anmeldenummer: 07102929.2
(22) Anmeldetag: 23.02.2007
(51) Int. Cl.: B60C 1/00, B60C 17/00, C08L 9/00

(54) **Fahrzeugluftreifen mit Seitenwand-Verstärkungsprofil**
Vehicle pneumatic type with side wall reinforcement profile
Pneus de véhicule à profilé de renfort latéral

(30) Priorität: 11.04.2006 DE 102006016916
(43) Veröffentlichungstag der Anmeldung: 17.10.2007
(73) Patentinhaber: Continental Aktiengesellschaft, 30165 Hannover (DE)
(72) Erfinder: Recker, Carla, 30167, Hannover (DE); Katrakova, Danka, 30419, Hannover (DE)

(56) Entgegenhaltungen:
- EP-A- 0 881 101
- EP-A- 0 903 373
- EP-A- 1 514 899
- EP-A1- 1 297 974
- JP-A- 5 320 421

## Beschreibung

Die Erfindung betrifft Fahrzeugluftreifen in radialer Bauart mit einem profilierten Laufstreifen, einem mehrlagigen Gürtelverband, einer Innenschicht, einer zumindest einlagig ausgeführten Karkasse, welche um Wulstkerne und Wulstprofile in Wulstbereichen geführt ist, Seitenwänden und mit zumindest je einem im Bereich jeder Seitenwand eingebrachten, im Querschnitt mondsichelförmigen Verstärkungsprofil, welches sich jeweils zumindest über einen Großteil der Seitenwandlänge erstreckt und aus zumindest einer vulkanisierten Kautschukmischung gebildet ist.

Derartige im Pannenfall selbsttragende Fahrzeugluftreifen sind in unterschiedlichen Ausführungen schon seit längerem bekannt. Die im Bereich der Seitenwände des Reifens eingebauten Verstärkungsprofile werden bezüglich ihrer Querschnittsform und bezüglich diverser Eigenschaften ihrer elastomeren Mischung derart ausgeführt, dass sie in der Lage sind, den Reifen bei einem plötzlichen Druckverlust, also im Pannenfall, auf eine gewisse Zeit bzw. über eine gewisse Laufleistung selbsttragend zu erhalten, so dass eine Weiterfahrt möglich ist. Ein selbsttragender Reifen der eingangs genannten Art ist beispielsweise aus der DE 29 43 654 A1 bekannt. Der Reifen ist im Bereich seiner Seitenwände jeweils mit einem ein- oder mehrteiligen, etwa mondsichelförmigen Verstärkungsprofil versehen, welches in der Regel zwischen der Innenschicht und der Karkasslage angeordnet ist und bis unterhalb des Gürtels und bis in die Nähe der Wulstbereiche verläuft.

Das Seitenwand-Verstärkungsprofil, auch SSR-Insert (self supporting runflat-insert) genannt, eines im Pannenfall selbsttragenden Reifens ist in der Regel aus einer harten Mischung gebildet, damit der Reifen auch ohne Luft über eine bestimmte Distanz gefahren werden kann und nicht vollständig einfällt, wodurch er auf der Felge läuft und dadurch völlig zerstört wird. Gleichzeitig darf sich die Mischung des Seitenwand-Verstärkungsprofils im Pannenlauf nicht zu stark erwärmen, damit es nicht durch Reversion der Mischung des Verstärkungsprofils zu einer Zerstörung des Verstärkungsprofils kommt. Im Normallauf soll der Reifen mit dem Seitenwand-Verstärkungsprofil sich jedoch möglichst wenig hinsichtlich seiner Fahreigenschaften, insbesondere bezüglich des Komforts, und seines Gewichts von einem üblichen Reifen unterscheiden. Haltbarkeit im Pannenfall und Komfortverhalten stehen dabei üblicherweise im Konflikt zueinander, denn Vulkanisate aus herkömmlichen Kautschukmischungen verhalten sich in der Regel so, dass sie bei Temperaturen oberhalb von ca. 150 °C, wie sie im Pannenfall bei Fahrzeugluftreifen im Seitenwandbereich gemessen werden, im Elastizitätsmodul abfallen, das heißt, weniger steif (hart) sind. Im Pannenfall wird aber gerade eine hohe Steifigkeit gewünscht. Wählt man aber die Mischung so, dass die Vulkanisate bereits bei herkömmlichen Fahrtemperaturen im Nichtpannenfall (ca. 50 bis 70 °C) einen höheren Elastizitätsmodul aufweisen, so erleidet man durch das eingeschränkte Federungsverhalten deutliche Einbußen im Fahrkomfort.

In der EP 1 577 339 A1 werden Kautschukmischungen für das Seitenwand-Verstärkungsprofil von im Pannenfall selbsttragenden Reifen vorgeschlagen, die 10 bis 100 Gewichtsteile Ruß und zumindest 2 Gewichtsteile Vernetzungsagens, bezogen auf 100 Gewichtsteile Kautschuk enthalten, wobei der Kautschuk 10 bis 50 Gew.-% eines speziellen sternförmigen, lösungspolymerisierten Polybutadiens aufweist. In den Beispielen werden Naturkautschuk und Polybutadien im Verschnitt eingesetzt und es wird mit einem herkömmlichen Schwefel-Beschleuniger-System vernetzt.

Der Erfindung liegt die Aufgabe zugrunde, im Pannenfall selbsttragende Fahrzeugluftreifen bereitzustellen, die sich durch ein verbessertes Pannenlaufverhalten (Ermöglichung des Fahrens über eine längere Strecke und/oder mit höherer Geschwindigkeit) bei gleichzeitig gutem Komfortverhalten im Nichtpannenfall auszeichnen.

Gelöst wird diese Aufgabe erfindungsgemäß dadurch, dass die Kautschukmischung des im Querschnitt mondsichelförmigen Verstärkungsprofils als Kautschuk zumindest ein Vinyl-Polybutadien mit einem Vinyl-Anteil von 50 bis 100 Gew.-% und 2 bis 15 phr eines flüssigen Polybutadiens enthält.

Überraschenderweise wurde gefunden, dass sich Mischungen, die Vinyl-Polybutadien mit einem Vinyl-Anteil von 50 bis 100 Gew.-% enthalten, nach der Vulkanisation ein gutes Dämpfungsverhalten (niedrige Rückprallelastizität bei 70 °C) aufweisen und gleichzeitig ein Abfall des Elastizitätsmoduls beim Übergang zu höheren Temperaturen, vermutlich durch eine Nachvernetzung, nicht zu beobachten ist. Außerdem zeigen die Vulkanisate keine Reversion und die Reißeigenschaften sind besonders gut. Die erfindungsgemäßen Reifen mit einem Verstärkungsprofil auf der Mischung mit Vinyl-Polybutadien zeichnen sich daher durch ein hervorragendes Pannenlaufverhalten aus und Einbußen im Komfort sind nicht zu verzeichnen.

Vinyl-Polybutadiene sind durch Polymerisation von Butadien mit Li-Alkylen zugänglich, wobei durch Zugabe von Ethern oder tertiären Aminen das Verhältnis von 1,4- zu 1,2-ständig eingebauten Monomereinheiten steuerbar ist. Die gemäß der Erfindung verwendeten Vinyl-Polybutadiene weisen einen Vinyl-Anteil von mindestens 50 Gew.-% auf. Diese Vinyl-Polybutadiene ermöglichen eine Kopplung zu sternförmigen Strukturen.

Gemäß einer vorteilhaften Weiterbildung der Erfindung enthält die Kautschukmischung des im Querschnitt mondsichelförmigen Verstärkungsprofils 70 bis 95 phr Vinyl-Polybutadien und 5 bis 30 phr eines Kautschukes ausgewählt aus Naturkautschuk, cis-1,4-Polybutadien und Styrol-Butadien-Copolymer. Diese Mischungen haben sich für das Pannenlaufverhalten und den Komfort als besonders positiv erwiesen.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Die Kautschukmischung für das im Querschnitt mondsichelförmige Verstärkungsprofil kann neben Vinyl-Polybutadien aber auch noch weitere Kautschuke, insbesondere Dienkautschuke, wie z. B. synthetisches Polyisopren (IR), Chlorprenkautschuk (CR), Styrol-Isopren-Butadien-Terpolymer (SIBR), Isopren-Butadien-Kautschuk oder Styrol-Isopren-Kautschuk, enthalten.

Um die Erwärmung des im Querschnitt mondsichelförmigen Verstärkungsprofils im Pannenfall weiter zu verringern (verringerter Heat-build-up), enthält die Mischung für das Verstärkungsprofil 50 bis 90 phr zumindest eines hysteresearmen Rußes mit einer Jodadsorptionszahl von weniger als 100 g/kg. Es können z. B. Ruße des Typs N339, N660, N550 oder Gemische aus diesen Rußen eingesetzt werden.

Zur weiteren Verbesserung des Dämpfungsverhaltens bei gleichzeitig hoher Steifigkeit im Pannenfall hat es sich als sinnvoll erwiesen, wenn die Mischung für das im Querschnitt mondsichelförmige Verstärkungsprofil 2 bis 15 phr eines flüssigen Polybutadiens, vorzugsweise eines Vinyl-Polybutadiens, enthält.

Die Kautschukmischung für das im Querschnitt mondsichelförmige Verstärkungsprofil kann weitere in der Kautschukindustrie übliche Zuschlagstoffe, wie beispielsweise weitere Füllstoffe (z. B. Kieselsäure, Aluminiumoxide, Alumosilicate, Aluminiumhydroxid, Schichtsilikate, Kreide, Stärke, Magnesiumoxid, Titandioxid und/oder Kautschukgele), Kupplungsagenzien zur Anbindung der Füllstoffe an den Kautschuk, Weichmacher, Alterungsschutzmittel, Aktivatoren, Wachse, Harze und Mastikationshilfsmittel, enthalten. Die Zuschlagstoffe werden in üblichen Mengen eingesetzt.

Die Vulkanisation wird in Anwesenheit von Schwefel oder Schwefelspendern durchgeführt, wobei einige Schwefelspender zugleich als Vulkanisationsbeschleuniger wirken können. Um die Eigenschaften des im Querschnitt mondsichelförmigen Verstärkungsprofils weiter zu bessern und es preiswerter zu gestalten, wirkt es sich positiv aus, wenn die Kautschukmischung des Verstärkungsprofils mit 2 bis 6 phr Schwefel vernetzt ist.

Des Weiteren kann die Kautschukmischung vulkanisationsbeeinflussende Substanzen wie Vulkanisationsbeschleuniger, Vulkanisationsverzögerer und Vulkanisationsaktivatoren in üblichen Mengen enthalten, um die erforderliche Zeit und/oder die erforderliche Temperatur der Vulkanisation zu kontrollieren und die Vulkanisateigenschaften zu verbessern. Die Vulkanisationsbeschleuniger können dabei zum Beispiel ausgewählt sein aus folgenden Beschleunigergruppen: Thiazolbeschleuniger wie z. B. 2-Mercaptobenzothiazol, Sulfenamidbeschleuniger wie z. B. Benzothiazyl-2-cyclohexylsulfenamid (CBS), Guanidinbeschleuniger wie z. B. N,N'-Diphenylguanidin (DPG), Dithiocarbamatbeschleuniger wie z. B. Zinkdibenzyldithiocarbamat, Disulfide. Die Beschleuniger können auch in Kombination miteinander eingesetzt werden, wobei sich synergistische Effekte ergeben können.

Die Kautschukmischung für das im Querschnitt mondsichelförmige Verstärkungsprofil wird nach üblichen Verfahren gemischt. Für die Herstellung des erfindungsgemäßen Fahrzeugluftreifens wird die Kautschukmischung für das im Querschnitt mondsichelförmige Verstärkungsprofil extrudiert und im Reifenrohlingsbau in üblicher Weise aufgelegt. Der Rohling wird im Anschluss vulkanisiert.

Als besonders vorteilhaft für die Pannenlaufeigenschaften hat es sich ferner erwiesen, wenn neben dem im Querschnitt mondsichelförmigen Verstärkungsprofil auch die Wulstprofile (Kernprofile, Apex) auf der gleichen Kautschukmischung basieren wie das im Querschnitt mondsichelförmige Verstärkungsprofil. Auch die Wulstprofile werden im Pannenfall extremen thermischen Belastungen ausgesetzt und müssen dynamisch steif sein. Zusätzlich bietet die Verwendung von identischen Mischungen für verschiedene Reifenbauteile Verarbeitungs-, Lagerungs- und Kostenvorteile.

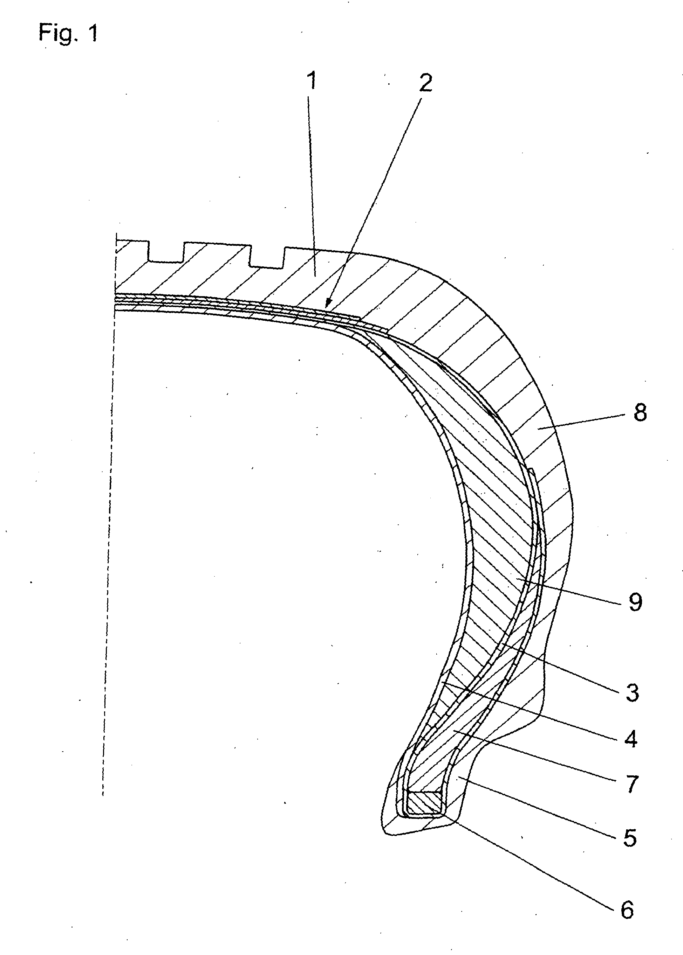

Anhand von Vergleichs- und Ausführungsbeispielen, die in der einzigen Zeichnungsfigur Fig. 1 und in der Tabelle 1 dargestellt sind, soll die Erfindung näher erläutert werden. Dabei zeigt Fig. 1 einen Teilquerschnitt durch einen Fahrzeugluftreifens radialer Bauart für Personenkraftwagen.

Gemäß des in Fig. 1 gezeigten Querschnitts sind beispielhaft die wesentlichen Bestandteile, aus welchen sich der dargestellte Fahrzeugluftreifen zusammensetzt, ein profilierter Laufstreifen 1, ein bei der gezeigten Ausführung aus zwei Lagen bestehender Gürtel 2, eine einlagig ausgeführte Karkasse 3, eine weitgehend luftdicht ausgeführte Innenschicht 4, Wülste 5 mit Wulstkernen 6 und Wulstkernprofilen (Kernprofilen, Apex) 7, sowie Seitenwände 8 und etwa mondsichelförmige Verstärkungsprofile 9. Die beiden Lagen des Gürtels 2 bestehen aus in eine Gummimischung eingebetteten Festigkeitsträgern aus Stahlcord, welche innerhalb jeder Lage parallel zueinander verlaufen, wobei die Stahlcorde der einen Lage in kreuzender Anordnung zu den Stahlcorden der zweiten Lage orientiert sind und mit der Reifenumfangsrichtung jeweils einen Winkel zwischen 15° und 30° einschließen. Auch die Karkasse 3 kann in herkömmlicher und bekannter Weise ausgeführt sein und somit in eine Gummimischung eingebettete, in radialer Richtung verlaufende Verstärkungsfäden aus einem textilen Material oder aus Stahlcord aufweisen. Die Karkasse 3 ist um die Wulstkerne 6 von innen nach außen geführt, ihre Hochschläge verlaufen neben den Wulstkernprofilen 7 in Richtung Gürtel 2.

Die aus der vulkanisierten Kautschukmischung hergestellten Verstärkungsprofile 9 sind während des Aufbaus des Reifens auf der Innenschicht 4 positioniert worden und befinden sich daher zwischen dieser und der Karkasse 3. Die Dicke der Verstärkungsprofile 9 nimmt sowohl Richtung Gürtel 2 als auch Richtung Wulst 5 ab. Richtung Gürtel 2 reicht jedes Verstärkungsprofil 9 bis unter die Randbereiche desselben. Richtung Wulst 5 endet jedes Verstärkungsprofil 9 knapp oberhalb des Wulstkernes 6. Über den überwiegenden Bereich der Länge der Seitenwand ist jedes Verstärkungsprofil 9 nahezu konstant dick ausgeführt, seine Stärke am Punkt der maximalen Dicke ist von der Reifengröße und der Reifenart abhängig und kann 5 bis 12 mm betragen.

In einem Fahrzeugluftreifen können erfindungsgemäß ausgeführte Verstärkungsprofile mit weiteren Verstärkungsprofilen kombiniert werden. Möglich ist auch eine andere Anordnung der Verstärkungsprofile als jene in Fig. 1 gezeigte, beispielsweise nicht zwischen Innenschicht 4 und Karkasse 3, sondern zwischen Karkasse 3 und Seitenwand 8.

In der folgenden Tabelle 1 sind Vergleichs- und erfindungsgemäße Kautschukmischungen dargestellt, die für das im Querschnitt mondsichelförmige Verstärkungsprofil und ggf. das Wulstprofil eingesetzt werden können. Bei sämtlichen in der Tabelle 1 enthaltenen Mischungsbeispielen sind die angegebenen Mengenangaben Gewichtsteile, die auf 100 Gewichtsteile Gesamtkautschuk bezogen sind (phr). Die Vergleichsmischungen sind mit V gekennzeichnet, die erfindungsgemäßen Mischungen sind mit E gekennzeichnet. In der Tabelle 1 wurden die Kautschuktypen variiert und in Mischung 6 flüssiges Polybutadien anstelle des Weichmacheröls eingesetzt. Die übrigen Mischungsbestandteile blieben unverändert.

Die Mischungsherstellung erfolgte unter üblichen Bedingungen in zwei Stufen in einem Labortangentialmischer. Die Umsatzzeiten bis zum Erreichen der relativen Vernetzungsgrade von 90 % (t₉₀) sowie die Reversionzeiten bis zu 99 % Vernetzungsgrad (t_{R99}) wurden über ein rotorloses Vulkameter (MDR = Moving Disc Rheometer) gemäß DIN 53 529 bei 160 °C ermittelt. Aus sämtlichen Mischungen wurden Prüfkörper durch optimale Vulkanisation unter Druck bei 160 °C hergestellt und mit diesen Prüfkörpern für die Kautschukindustrie typische Materialeigenschaften bestimmt, die in der Tabelle 1 aufgelistet sind. Für die Tests an Prüfkörpern wurden folgende Testverfahren angewandt:
- Shore-A-Härte bei Raumtemperatur und 70 °C gemäß DIN 53 505
- Rückprallelastizität bei Raumtemperatur und 70 °C gemäß DIN 53 512
- Zugfestigkeit bei Raumtemperatur und 70 °C gemäß DIN 53 504
- Reißdehnung bei Raumtemperatur gemäß DIN 53 504
- mittlerer dynamischer Speichermodul E' zwischen 50 und 70 °C sowie zwischen 100 und 250 °C gemäß DIN 53 513 aus Messung mit Variation der Temperatur bei dynamischer Verformungsamplitude von 1 % bei 6 % Vorverformung und 10 Hz

**Tabelle 1**

| Bestandteile | Einheit | 1(V) | 2(V) | 3(V) | 4(V) | 5(V) | 6(E) |
|---|---|---|---|---|---|---|---|
| Naturkautschuk | phr | 100 | - | - | 20 | - | - |
| BR^{a} | phr | - | 100 | - | - | - | - |
| Vinyl-BR^{b} | phr | - | - | 100 | 80 | 100 | 100 |
| flüssiges BR^{c} | phr | - | - | - | - | - | 10 |
| Ruß N660 | phr | 70 | 70 | 70 | 70 | 70 | 70 |
| Weichmacheröl | phr | 5 | 5 | 5 | 5 | 5 | - |
| Klebharz | phr | 3 | 3 | 3 | 3 | 3 | 3 |
| Alterungsschutzmittel | phr | 3 | 3 | 3 | 3 | 3 | 3 |
| Zinkoxid | phr | 5 | 5 | 5 | 5 | 5 | 5 |
| Stearinsäure | phr | 1 | 1 | 1 | 1 | 1 | 1 |
| Beschleuniger | phr | 2,2 | 2,2 | 2,2 | 2,2 | 2,2 | 2,2 |
| Schwefel | phr | 3 | 3 | 3 | 3 | 3 | 3 |

| Eigenschaften | | | | | | | |
|---|---|---|---|---|---|---|---|
| t₉₀ | min | 2,61 | 3,44 | 9,6 | 5,98 | 25,19 | 25,69 |
| t_{R99} | min | 6,02 | 7,91 | - | - | - | - |
| Härte bei RT | Shore A | 70,7 | 75,9 | 68,1 | 69,1 | 66,9 | 70,0 |
| Härte bei 70 °C | Shore A | 69,5 | 75,7 | 67,3 | 68,1 | 64,1 | 65,5 |
| Rüpra. bei RT | % | 59,2 | 71,6 | 18,8 | 29,9 | 22,1 | 20,7 |
| Rüpra. bei 70°C | % | 72,9 | 74,9 | 60,7 | 63,0 | 58,3 | 46,3 |
| Zugfestigkeit bei RT | MPa | 14,4 | 8,7 | 10,7 | 9,8 | 10,6 | 11,1 |
| Reißdehnung bei RT | % | 244 | 147 | 197 | 182 | 211 | 290 |
| E' mean (50-70 °C) | MPa | 9,6 | 13,3 | 9,0 | 9,0 | 8,2 | 8,0 |
| E' mean (100-250 °C) | MPa | 7,7 | 12,7 | 9,4 | 9,1 | 8,6 | 8,5 |
| E'(250°C)-E'(150°C) | MPa | -4,1 | -1,6 | 4,9 | 1,8 | 3,4 | 2,6 |

| | | | | | | | |
|---|---|---|---|---|---|---|---|
| ^{a}High-cis Polybutadien vom Nd-Typ ^{b}Vinyl-Polybutadien mit einem Vinyl-Anteil von 80 Gew.-%, Budene 7076, Goodyear Chemicals, USA ^{c}flüssiges Polybutadien mit einem Vinyl-Anteil von 30 Gew.-%, Mw 2900 g/mol, Ricon 130 MA-13, Sartomer, USA | | | | | | | |

Aus der Tabelle 1 wird ersichtlich, dass die erfindungsgemäßen Mischungen keine Reversion zeigen, es konnte keine Reversionszeit t_{R99} ermittelt werden, da die Rheometerkurven nicht abfielen. Die Vulkanisate aus den Mischungen 3 bis 5 zeigen im Vergleich zu den Vulkanisaten 1 und 2 auf der Basis von Naturkautschuk bzw. cis-Polybutadien eine geringere Härte, eine geringere Rückprallelastizität bei 70 °C und eine geringeren dynamischen Speichermodul E' (50-70 °C), wobei die Mischungen 5 und 6 eine besonders geringe Rückprallelastizität und geringeren dynamischen Speichermodul E' (50-70 °C) zeigen. Diese drei Eigenschaften bewirken beim Einsatz als Verstärkungsprofil in Notlaufreifen ein gutes Komfortverhalten im Normalbetrieb. Gleichzeitig zeichnen sich die Vulkanisate der Mischungen 3 bis 6 durch gute Reißeigenschaften, d. h. hohe Zugfestigkeiten und Reißdehnungen, aus. Besonders bemerkenswert bei den Vulkanisaten aus den Mischungen 3 bis 6 ist jedoch, dass sie mit zunehmender Temperatur, entgegen dem üblichen Verhalten wie sie beispielsweise die Vulkanisate der Mischungen 1 und 2 zeigen, eine Steifigkeitszunahme aufweisen; die Differenz zwischen dem Elastizitätsmodul bei 250 °C und dem bei 150 °C ist positiv. D. h. die Vulkanisate werden mit zunehmender Temperatur, wie sie im Pannenfall auftritt, steifer. Es wird somit im Pannenfall das Fahren über eine längere Strecke und/oder mit höherer Geschwindigkeit ermöglicht.

Aus der Mischung 5 wurden außerdem Reifen der Dimension 245/45 R17 gebaut, die im Querschnitt mondsichelförmige Verstärkungsprofile im Seitenwandbereich einer Dicke von 9,6 mm aufwiesen. Mit den Reifen wurde das Notlaufverhalten im Pannenfall untersucht, wobei die noch fahrbare Kilometerleistung ohne Luft bei einer Geschwindigkeit von 80 km/h auf einer Versuchstrommel ermittelt wurde. Die Fahrleistung des herkömmlichen Serienreifens mit einem im Querschnitt mondsichelförmige Verstärkungsprofile, das auf einem Naturkautschuk/high-cis Polybutadien-Verschnitt basiert, wurde dabei als Vergleich gewählt und gleich 100 % gesetzt. Außerdem wurde das Komfortverhalten der Reifen im üblichen Fahrbetrieb (mit vorgeschriebenem Luftdruck) über subjektive Beurteilung bewertet. Die Reifen mit dem Verstärkungsprofil aus der Mischung 5 zeichneten sich dabei durch eine um 10 % verlängerte Notlaufdistanz und durch ein um 5 % verbessertes Komfortverhalten aus.

## Patentansprüche

1. Fahrzeugluftreifen in radialer Bauart mit einem profilierten Laufstreifen (1), einem mehrlagigen Gürtelverband (2), einer Innenschicht (4), einer zumindest einlagig ausgeführten Karkasse (3), welche um Wulstkerne (6) und Wulstprofile (7) in Wulstbereichen (5) geführt ist, Seitenwänden (8) und mit zumindest je einem im Bereich jeder Seitenwand (8) eingebrachten, im Querschnitt mondsichelförmigen Verstärkungsprofil (9), welches sich jeweils zumindest über einen Großteil der Seitenwandlänge erstreckt und aus zumindest einer vulkanisierten Kautschukmischung gebildet ist, **dadurch gekennzeichnet, dass** die Kautschukmischung des im Querschnitt mondsichelförmigen Verstärkungsprofils (9) als Kautschuk zumindest ein Vinyl-Polybutadien mit einem Vinyl-Anteil von 50 bis 100 Gew.-% und 2 bis 15 phr eines flüssigen Polybutadiens enthält.

2. Fahrzeugluftreifen nach Anspruch 1, **dadurch gekennzeichnet, dass** die Kautschukmischung des im Querschnitt mondsichelförmigen Verstärkungsprofils (9) 70 bis 95 phr (Gewichtsteile, bezogen auf 100 Gewichtsteile der gesamten Kautschuke in der Mischung) Vinyl-Polybutadien und 5 bis 30 phr eines Kautschukes ausgewählt aus Naturkautschuk, cis-1,4-Polybutadien und Styrol-Butadien-Copolymer enthält.

3. Fahrzeugluftreifen nach Anspruch 1 oder 2, **dadurch gekennzeichnet, dass** die Kautschukmischung des im Querschnitt mondsichelförmigen Verstärkungsprofils (9) 50 bis 90 phr zumindest eines hysteresearmen Rußes mit einer Jodadsorptionszahl von weniger als 100 g/kg enthält.

4. Fahrzeugluftreifen nach zumindest einem der vorhergehenden Ansprüche, **dadurch gekennzeiehnet, dass** das flüssige Polybutadien ein Vinyl-Polybutadien ist.

5. Fahrzeugluftreifen nach zumindest einem der vorhergehenden Ansprüche, **dadurch gekennzeichnet, dass** die Kautschukmischung des im Querschnitt mondsichelförmigen Verstärkungsprofils (9) mit 2 bis 6 phr Schwefel vernetzt ist.

6. Fahrzeugluftreifen nach zumindest einem der vorhergehenden Ansprüche, **dadurch gekennzeichnet, dass** die Wulstprofile (7) auf der gleichen Kautschukmischung basieren wie das im Querschnitt mondsichelförmige Verstärkungsprofil (9).

## Claims

1. Pneumatic vehicle tyre of a radial type of construction, comprising a profiled tread rubber (1), a multi-ply breaker belt assembly (2), an inner layer (4), a carcass (3) of at least a single-ply configuration, which is led around bead cores (6) and bead profiles (7) in bead regions (5), sidewalls (8) and at least one cross-sectionally crescent-shaped reinforcing profile (9), which is respectively incorporated in the region of each sidewall (8), in each case extends at least over a large part of the length of the sidewall and is formed from at least one vulcanized rubber mix, **characterized in that** the rubber mix of the cross-sectionally crescent-shaped reinforcing profile (9) contains at least one vinyl polybutadiene with a vinyl content of 50 to 100% by weight and 2 to 15 phr of a liquid polybutadiene as the rubber.

2. Pneumatic vehicle tyre according to Claim 1, **characterized in that** the rubber mix of the cross-sectionally crescent-shaped reinforcing profile (9) contains 70 to 95 phr (parts by weight, based on 100 parts by weight of all the rubbers in the mix) of vinyl polybutadiene and 5 to 30 phr of a rubber chosen from natural rubber, cis-1,4-polybutadiene and styrene butadiene copolymer.

3. Pneumatic vehicle tyre according to Claim 1 or 2, **characterized in that** the rubber mix of the cross-sectionally crescent-shaped reinforcing profile (9) contains 50 to 90 phr, of at least one low-hysteresis carbon black with an iodine absorption number of less than 100 g/kg..

4. Pneumatic vehicle tyre according to at least one of the preceding claims, **characterized in that** the liquid polybutadiene is a vinyl polybutadiene.

5. Pneumatic tyre according to at least one of the preceding claims, **characterized in that** the rubber mix of the cross-sectionally crescent-shaped reinforcing profile (9) is crosslinked with 2 to 6 phr sulphur.

6. Pneumatic vehicle tyre according to at least one of the preceding claims, **characterized in that** the bead profiles (7) are based on the same rubber mix as the cross-sectionally crescent-shaped reinforcing profile (9).

## Revendications

1. Bandage pneumatique pour véhicule, à structure radiale, avec bande de roulement (1) profilée, ensemble multicouches de ceinture (2), couche intérieure (4), carcasse (3) en au moins une couche passée autour de l'âme (6) du bourrelet et le profil (7) du bourrelet dans les zones (5) de bourrelet, parois latérales (8) et un ou plusieurs profilés de renfort (9) à section transversale en croissant de lune installés dans la partie occupée par chaque paroi latérale (8), s'étendant sur au moins une grande partie de la longueur de la paroi latérale et formés d'au moins un mélange de caoutchouc vulcanisé,
**caractérisé en ce que**
le mélange de caoutchouc du profilé de renfort (9) à section transversale en croissant de lune contient comme caoutchouc au moins un vinyle-polybutadiène dont la proportion de vinyle est de 50 à 100 % en poids et la proportion de polybutadiène liquide de 2 à 15 phr.

2. Bandage pneumatique pour véhicule selon la revendication 1, **caractérisé en ce que** le mélange du caoutchouc du profilé de renfort (9) à section transversale en croissant de lune contient de 70 à 95 phr (parties en poids par rapport à 100 parties en poids de l'ensemble des caoutchoucs du mélange) de vinyle-polybutadiène et de 5 à 30 phr d'un caoutchouc sélectionné parmi le caoutchouc naturel, le poly(cis-1,4-butadiène) et les copolymères de styrène et de butadiène.

3. Bandage pneumatique pour véhicule selon les revendications 1 ou 2, **caractérisé en ce que** le mélange de caoutchouc du profilé de renfort (9) à section transversale en croissant de lune contient de 50 à 90 phr d'au moins un noir de carbone à faible hystérésis dont l'indice d'adsorption d'iode est inférieur à 100 g/kg.

4. Bandage pneumatique pour véhicule selon au moins l'une des revendications précédentes, **caractérisé en ce que** le polybutadiène liquide est un vinyle-polybutadiène.

5. Bandage pneumatique pour véhicule selon au moins l'une des revendications précédentes, **caractérisé en ce que** le mélange de caoutchouc du profilé de renfort (9) à section transversale en croissant de lune est réticulé à l'aide de 2 à 6 phr de soufre.

6. Bandage pneumatique pour véhicule selon au moins l'une des revendications précédentes, **caractérisé en ce que** les profilés de bourrelet (7) sont basés sur le même mélange de caoutchouc que le profilé de renfort (9) à section transversale en croissant de lune.
